# EUROPEAN PATENT APPLICATION

(11) **EP 4 439 904 A1**
(43) Date of publication of application: **02.10.2024**
(21) Application number: 22898577.6
(22) Date of filing: 22.11.2022
(51) Int. Cl.: H02J 3/14, H02J 13/00

(54) **POWER CONTROL DEVICE, POWER CONTROL SYSTEM, AND PROGRAM**

(30) Priority: 24.11.2021 JP 2021189804
(71) Applicant: Kyushu Institute of Technology, Kitakyushu-shi Fukuoka 804-8550 (JP)
(72) Inventor: YONEZAWA Keiichirou, Kitakyushu-shi, Fukuoka 804-8550 (JP); HASEGAWA Kazunori, Kitakyushu-shi, Fukuoka 804-8550 (JP); WATANABE Masayuki, Kitakyushu-shi, Fukuoka 804-8550 (JP); YAMAMOTO Shuhei, Kitakyushu-shi, Fukuoka 804-8550 (JP)
(74) Representative: Ström & Gulliksson AB
(86) International application number: PCT/JP2022/043207
(87) International publication number: WO 2023/095794

(57) **Abstract**

A power control apparatus is a power control apparatus for stabilizing a power supply state of a power grid network, including a control unit that transmits a control instruction indicating power consumption of a power consumption unit provided on a downstream side of an inverter, which receives supply of power from the power grid network, to an inverter control unit that controls the inverter, in which the control unit transmits a first control instruction, which is the control instruction, to the inverter control unit, the first control instruction indicating that the power consumption of the power consumption unit is to be increased when there is an excess in the power supply state and indicating that the power consumption of the power consumption unit is to be decreased when there is a deficiency in the power supply state, the control unit receives a first response indicating that the power consumption of the power consumption unit has been changed from the inverter control unit after the first control instruction is transmitted to the inverter control unit, and the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

## Description

### [Technical Field]

The present invention relates to a power control apparatus, a power control system, and a program.

Priority is claimed on Japanese Patent Application No. 2021-189804 filed on November 24, 2021, the content of which is incorporated herein by reference.

### [Background Art]

For stable power supply, the need for matching the amount of power supplied and the amount of power consumed in real time is the major premise in power grid networks. Currently, Japan uses demand-supply control techniques, for example, governor-free control, load frequency control (LFC), economic load dispatch control (EDC), and the like, to adjust and control the output of power generators so that supply and demand are balanced, and thereby curbing fluctuations in the frequency.

A governor is a control device for keeping the rotating speed of a rotating machine constant and causes the opening degree of the steam control valve of a steam turbine or a valve called a guide vane of a water turbine to decrease if the rotation speed increases and causes the opening degree to increase if the rotation speed is reduced. Governor-free control refers to control over constant change in the rotation speed such that the output is changed according to operations of the governor.

In contrast, in a plant such as a nuclear plant that is required to operate with constant output, load limit operations are performed by using LFC. In LFC, control is performed on constant change in the rotation speed such that the output is not changed by using a load limit. While LFC and EDC are central control performed by power dispatch centers, governor-free control is implemented locally in each generator. A reaction in governor-free control is the fastest in demand-supply control and plays a role in absorbing the demand-supply imbalance in a fluctuating period of about tens of seconds to several minutes. Note that, since governor-free control is proportional control in which a steady-state deviation remains, the role of returning to the standard frequency is taken by LFC or the like.

If generative energy becomes a main power source and the number of thermal power plants with turbines reduces in the future, it is predicted that stable maintenance of power grid networks will be difficult because the adjustment capacity in the scale of governor-free control and LFC cannot be guaranteed. For this reason, the adjustment capacity in the scale of governor-free control and LFC needs to be developed.

A power grid stabilization system in which power consumed by multiple loads connected to a power grid is controlled via a communication line, thereby stabilizing frequencies of the power grid is known (PTL 1). In the power grid stabilization system disclosed in PTL 1, the periods in which control is performed to adjust the amount of power consumed are assumed to be 6 minutes and 30 minutes.

### [Citation List]

### [Patent Document]

### [Patent Document 1]

Japanese Unexamined Patent Application, First Publication No. 2021-141625

### [Summary of Invention]

### [Technical Problem]

In the related art of the power grid stabilization system disclosed in PTL 1, the times (e.g., 6 minutes, 30 minutes, etc.) are assumed as periods (i.e., frequencies) in which control is performed to adjust the amount of power consumed. Meanwhile, in the related art, with respect to a reaction time from the time when control is performed to the time when a reaction is made, the amount of power consumed can be adjusted in a reaction time of merely about 30 minutes.

Power grid networks are required to provide adjustment capacity for matching the amount of power supplied and the amount of power consumed for a short period of time. The short period of time refers to a time shorter than or equal to 30 minutes.

The present invention has been made in view of the above-described points, and aims to provide a power control apparatus, a power control system, and a program that can provide adjustment capacity for matching the amount of power supplied and the amount of power consumed for a short period of time on a power grid network.

### [Solution to Problem]

The present invention has been made to solve the above-described problems, and an aspect of the present invention is a power control apparatus for stabilizing a power supply state of a power grid network, including a control unit that transmits a control instruction indicating power consumption of a power consumption unit provided on a downstream side of an inverter, which receives supply of power from the power grid network, to an inverter control unit that controls the inverter, in which the control unit transmits a first control instruction, which is the control instruction, to the inverter control unit, the first control instruction indicating that the power consumption of the power consumption unit is to be increased when there is an excess in the power supply state and indicating that the power consumption of the power consumption unit is to be decreased when there is a deficiency in the power supply state, the control unit receives a first response indicating that the power consumption of the power consumption unit has been changed from the inverter control unit after the first control instruction is transmitted to the inverter control unit, and the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

In addition, according to an aspect of the present invention, in the power control apparatus, the first control instruction indicates that the power consumption of the power consumption unit is to be changed while the power consumption unit is operating by a percentage that is lower than a predetermined percentage that is a percentage higher than 0 percent and lower than or equal to 100 percent from the power consumption of the power consumption unit.

In addition, according to an aspect of the present invention, in the power control apparatus, the control unit receives an external control instruction that is a control instruction transmitted from outside when there is an excess or deficiency in the power supply state and indicating that the power consumption of the power consumption unit is to be changed, the control unit transmits the first control instruction to the inverter control unit based on the received external control instruction, and the control unit transmits a second response with respect to the first response received from the inverter control unit to the outside.

In addition, according to an aspect of the present invention, the power control apparatus further includes a frequency detection unit that detects a frequency of power supplied from the power grid network to the inverter, in which, if it is determined that there is an excess or deficiency in the power supply state based on the detection result of the frequency of the frequency detection unit, the control unit transmits the first control instruction to two or more inverter control units, and the control unit receives the first response from the two of more inverter control units.

In addition, according to an aspect of the present invention, in the power control apparatus, the control unit monitors power consumption in units of multiple power consumption units and transmits the first control instruction that is common to each of the multiple power consumption units when there is an excess or deficiency in the power supply state.

In addition, according to an aspect of the present invention, in the power control apparatus, the control unit monitors power consumption in units of individual power consumption units among the multiple power consumption units and transmits the first control instruction to each of the multiple power consumption units individually when there is an excess or deficiency in the power supply state.

In addition, according to an aspect of the present invention, in the power control apparatus, the inverter is provided in an air conditioning device or a refrigeration device.

In addition, according to an aspect of the present invention, a power control system includes a power control apparatus for stabilizing a power supply state of a power grid network, and one or more inverter devices, in which each of the inverter device includes an inverter that receives supply of power from the power grid network, an inverter control unit that controls the inverter, and a power consumption unit provided on a downstream side of the inverter, the power control apparatus includes a control unit that transmits a control instruction indicating power consumption of the power consumption unit to the inverter control unit, the control unit transmits a first control instruction, which is the control instruction, to the inverter control unit, the first control instruction indicating that the power consumption of the power consumption unit is to be increased when there is an excess in the power supply state and indicating that the power consumption of the power consumption unit is to be decreased when there is a deficiency in the power supply state, the control unit receives a first response indicating that the power consumption of the power consumption unit has been changed from the inverter control unit after the first control instruction is transmitted to the inverter control unit, and the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

In addition, according to an aspect of the present invention, a program causes a computer of a power control apparatus for stabilizing a power supply state of a power grid network to perform a step of transmitting a control instruction indicating power consumption of a power consumption unit provided on a downstream side of an inverter, which receives supply of power from the power grid network, to an inverter control unit that controls the inverter, a step of transmitting, to the inverter control unit, a first control instruction that is the control instruction indicating that the power consumption of the power consumption unit is to be increased when there is an excess in the power supply state and indicating that the power consumption of the power consumption unit is to be decreased when there is a deficiency in the power supply state, and a step of receiving a first response indicating that the power consumption of the power consumption unit has been changed from the inverter control unit after the first control instruction is transmitted to the inverter control unit, in which the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

### [Advantageous Effects of Invention]

According to the present invention, it is possible to provide adjustment capacity for matching the amount of power supplied and the amount of power consumed for a short period of time in a power grid network.

### [Brief Description of Drawings]

FIG. 1 is a diagram illustrating an example of a configuration of a power control system according to a first embodiment of the present invention.
FIG. 2 is a diagram illustrating an example of a functional configuration of a power control apparatus according to the first embodiment of the present invention.
FIG. 3 is a diagram illustrating an example of a functional configuration of an inverter device according to the first embodiment of the present invention.
FIG. 4 is a flowchart showing an example of a power control process according to the first embodiment of the present invention.
FIG. 5 is a graph showing an example of control of changing power consumption according to the first embodiment of the present invention.
FIG. 6 is a diagram illustrating an example of a configuration of a power control system according to a second embodiment of the present invention.
FIG. 7 is a diagram illustrating an example of a functional configuration of a power control apparatus according to the second embodiment of the present invention.
FIG. 8 is a diagram illustrating an example of a power control process according to the second embodiment of the present invention.

### [Description of Embodiments]

### (First embodiment)

Next, an embodiment of the present invention will be described in detail with reference to the drawings.

### [Configuration of Power Control System 1]

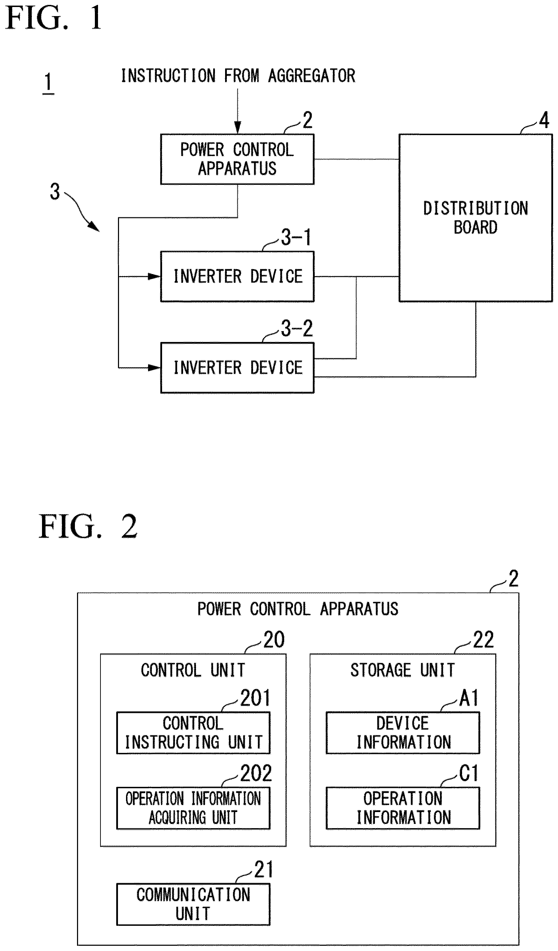

FIG. 1 is a diagram illustrating an example of a configuration of a power control system 1 according to the present embodiment. The power control system 1 includes a power control apparatus 2, an inverter device 3, and a distribution board 4. The inverter device 3 is composed of an inverter device 3-1 and an inverter device 3-2. In the following description, the inverter device 3-1 and the inverter device 3-2 may be collectively referred to as an "inverter device 3".

The power control apparatus 2 is a power control apparatus for stabilizing a power supply state of a power grid network. When there is an excess or deficiency in the power supply state, an aggregator transmits an instruction for instructing that power consumption of the inverter device 3 is to be changed to the power control apparatus 2. The power control apparatus 2 changes power consumption of the inverter device 3 based on the instruction from the aggregator. Changing power consumption means adjusting power consumption or controlling power consumption.

The inverter device 3 is a device with an inverter. The inverter device 3 is, for example, an air conditioning device, a refrigeration device, or the like. An example of the air conditioning device includes an air conditioner, or the like. An example of the refrigeration device includes a cooler (a cooling fan), or the like. The inverter device 3 has an inverter and no storage battery. Note that the inverter device 3-1 and the inverter device 3-2 may be different devices or may be the same device.

In addition, although the power control system 1 is depicted as including two inverter devices of the inverter device 3-1 and the inverter device 3-2 in FIG. 1 as an example, the embodiment is not limited thereto. The number of inverter devices included in the power control system 1 may be three or more or may be one.

The distribution board 4 distributes power supplied from the power grid network to the inverter device 3. The frequency of the power grid network is uniform in the entire power grid network. Note that the distribution board 4 distributes power also to the power control apparatus 2.

The time required for a reaction in the power control system 1 is 15 minutes or less. A reaction in the present embodiment refers to an operation in which the power control apparatus 2 receives an instruction from the aggregator then controls the inverter device 3 and transmits a reply indicating that control has been completed to the aggregator.

In addition, when the power control apparatus 2 controls power consumption of the inverter device 3, the power control apparatus 2 causes the inverter device 3 to continuously change the power consumption for a certain period of time or more.

### [Functional Configuration of Power Control Apparatus 2]

FIG. 2 is a diagram illustrating an example of a functional configuration of the power control apparatus 2 according to the present embodiment. The power control apparatus 2 includes, for example, a control unit 20, a communication unit 21, and a storage unit 22.

The control unit 20 performs various kinds of control over the power control apparatus 2. The control unit 20 includes a control instructing unit 201 and an operation information acquiring unit 202. The control unit 20 is realized by, for example, a microcomputer. Each functional unit included in the control unit 20 is realized by a central processing unit (CPU) executing processing of a program read from a read only memory (ROM).

The control instructing unit 201 transmits a control instruction D1 indicating power consumption to the inverter device 3. The power consumption is power consumed by a power consuming unit provided on the downstream side of the inverter of the inverter device 3. The control instruction D1 is a signal for indicating power consumed by the power consuming unit provided on the downstream side of the inverter. The control instruction D1 includes a first control instruction E1, which will be described below, an instruction for setting power consumption to a predetermined value, or the like.

The control instructing unit 201 transmits the first control instruction E1 to the inverter device 3 based on the instruction from the aggregator. The instruction from the aggregator is transmitted to the power control apparatus 2 when there is an excess or deficiency in the power supply state of the power grid network. The first control instruction E1 is a signal for instructing changing power consumption of the inverter device 3. The first control instruction E1 indicates that power consumption is to be changed within a certain period of time by a certain percentage. For example, the first control instruction E1 indicates that power consumption is to be changed by plus 5% within five minutes.

The operation information acquiring unit 202 acquires operation information C1 from the distribution board 4. The operation information C1 is information representing an operation state of the inverter device 3. The operation information C1 includes power consumed by the power consuming unit provided on the downstream side of the inverter of the inverter device 3. The operation information acquiring unit 202 acquires the operation information C1 from the distribution board 4 at predetermined intervals. The predetermined interval is, for example, one second. The operation information acquiring unit 202 causes the storage unit 22 to store the acquired operation information C1. Each time the operation information acquiring unit 202 acquires new operation information C1, the operation information acquiring unit 202 updates the operation information C1 stored in the storage unit 22 with the acquired operation information C1. In other words, the operation information C1 is updated immediately (in real-time) in the period in which the inverter device 3 is operating.

In the present embodiment, as an example, the control instructing unit 201 groups multiple inverter devices 3 to monitor the operation state of each group, and transmits a common first control instruction E1 to one or more inverter devices 3 included in the group for each group. In the example of FIG. 1, the inverter device 3-1 and the inverter device 3-2 constitute one group. When the power control system 1 includes three or more inverter devices 3, the control instructing unit 201 divides the three or more inverter devices 3 into one or more groups to monitor their operation states. The number of inverter devices 3 included in a group may vary depending on groups or may be the same in groups.

The communication unit 21 transmits and receives various types of information. The communication unit 21 includes a communication interface (I/F). The communication unit 21 performs wireless communication, as an example. Note that the communication unit 21 may perform wired communication. The communication performed by the communication unit 21 includes communication for transmitting the first control instruction E1 from the control instructing unit 201 to the inverter device 3 and communication for acquiring the operation information C1 by the operation information acquiring unit 202 from the distribution board 4.

The storage unit 22 stores various types of information. The storage unit 22 is configured by using a storage apparatus, for example, a semiconductor storage apparatus, or the like. The various types of information stored in the storage unit 22 include apparatus information A1, which will be described below, and the above-described operation information C1. Here, the apparatus information A1 is stored in the storage unit 22 in advance. Alternatively, the apparatus information A1 may be acquired from outside, without being stored in the storage unit 22.

### [Functional Configuration of Inverter Device 3]

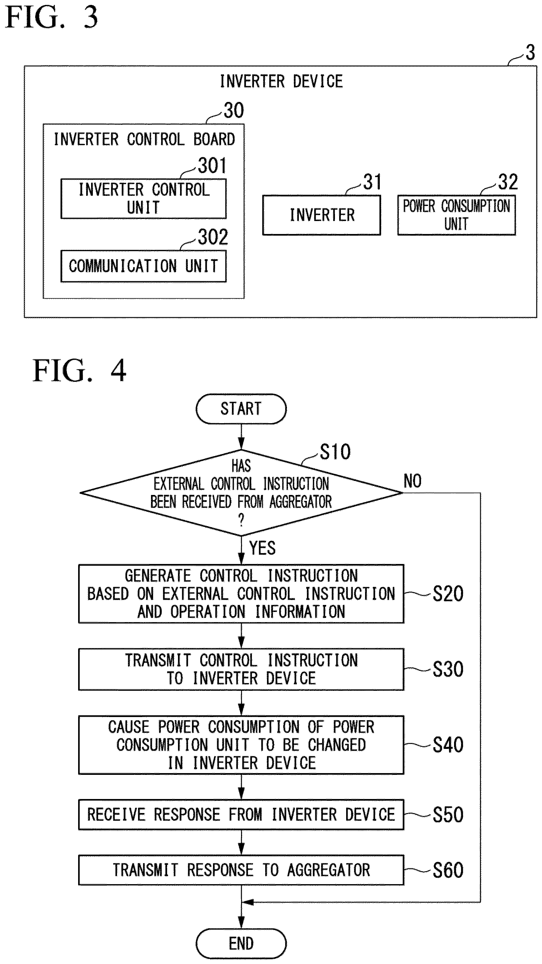

FIG. 3 is a diagram illustrating an example of a functional configuration of the inverter device 3 according to the present embodiment. Note that the functional configuration of the inverter device 3 illustrated in FIG. 3 is common to the inverter device 3-1 and the inverter device 3-2. Each inverter device 3 includes an inverter control board 30, an inverter 31, and a power consumption unit 32.

The inverter control board 30 includes an inverter control unit 301 and a communication unit 302. The inverter control board 30 is installed in an outdoor unit in a case that the inverter device 3 is air conditioning equipment.

The inverter control unit 301 performs various kinds of control over the inverter device 3. The inverter control unit 301 is realized by, for example, a microcomputer. The various kinds of control by the inverter control unit 301 are realized by a CPU executing processing of a program read from a ROM.

The inverter control unit 301 controls an output frequency of the inverter 31. The output frequency of the inverter 31 is a frequency of AC power supplied to the power consumption unit 32. Thus, the inverter control unit 301 controls the inverter 31 receiving power supplied from the power grid network.

The communication unit 302 transmits and receives various types of information. The communication unit 302 includes a communication 1/F. The communication unit 302 performs wireless communication, as an example. Note that the communication unit 302 may perform wired communication. The communication performed by the communication unit 302 includes communication for receiving the control instruction D1 from the power control apparatus 2 and communication for transmitting an inverter response signal F1 to the power control apparatus 2, which will be described below.

The communication unit 302 performs each of the communication operation for receiving the control instruction D1 from the power control apparatus 2 and the communication operation for transmitting the inverter response signal F1 to the power control apparatus 2 in unidirectional communication (one-way communication) as an example. Alternatively, the communication unit 302 may perform transmission and reception of various types of information in bidirectional communication.

The inverter 31 changes power consumption of the power consumption unit 32 by controlling an output frequency.

The power consumption unit 32 consumes power supplied from the power grid network. That is, the power consumption unit 32 is a load. The power consumption unit 32 is, for example, a motor. If the power consumption unit 32 is a motor, the inverter device 3-1 controls the number of revolutions of the motor by controlling the output frequency.

Note that, since the inverter device 3 does not include a storage battery as described above, power is consumed by the power consumption unit 32 in the inverter device 3, without being consumed for charging a storage battery.

### [Power Control Process]

Next, the power control process that is a process of controlling power consumption of the inverter device 3 will be described with reference to FIG. 4. FIG. 4 is a flowchart showing an example of the power control process according to the present embodiment. In the power control system 1, the power control process is repeatedly performed while the power grid network supplies power to the inverter device 3.

Step S10: The control instructing unit 201 determines whether an external control instruction B1 has been received from the aggregator. The external control instruction B1 is a signal for instructing that power consumption of the inverter device 3 is to be changed. The power consumption of the inverter device 3 is power consumption of the power consumption unit 32 provided on the downstream side of the inverter 31 of the inverter device 3.

The aggregator transmits the external control instruction B1 to the power control apparatus 2 when there is an excess or deficiency in the power supply state of the power grid network. Note that the aggregator determines whether there is an excess or deficiency in the power supply state highly frequently, for example, at intervals shorter than 30 minutes. The control instructing unit 201 determines that the external control instruction B1 has been received from the aggregator when the communication unit 21 receives the external control instruction B1.

The control instructing unit 201 performs the processing of step S20 if it is determined that the external control instruction B1 has been received from the aggregator (step S10: YES). On the other hand, the control instructing unit 201 ends the power control process if it is determined that the external control instruction B1 has not been received from the aggregator (step S10: NO).

The control instructing unit 201 receives the external control instruction B1 indicating that the power consumption of the power consumption unit 32 is to be changed, which is a control instruction transmitted from the aggregator when there is an excess or deficiency in the power supply state as described above.

Step S20: The control instructing unit 201 generates the first control instruction E1 based on the external control instruction B1 and the operation information C1. Here, the external control instruction B1 indicates the amount of power consumption to be changed out of the power consumption of the entire inverter device 3 that receives power supplied from the power grid network via the distribution board 4. The aggregator calculates the amount of power consumption to be changed based on the difference between the power supplied to the entire inverter device 3 from the power grid network and the power consumption of the entire inverter device 3.

The control instructing unit 201 reads the operation information C1 from the storage unit 22. The control instructing unit 201 acquires the value of the power consumption of the power consuming unit 32 included in the inverter device 3 from the read operation information C1. The operation information C1 is updated immediately in the period in which the inverter device 3 is operating, as described above. Thus, the value of the power consumption acquired by the control instructing unit 201 from the operation information C1 is the value of the current power consumption of the inverter device 3.

The control instructing unit 201 groups multiple inverter devices 3 to monitor the operation state of each group. To this end, the control instructing unit 201 calculates the value of the power consumption of the inverter devices 3 in each group. As a value of power consumption of each group, for example, the control instructing unit 201 calculates the average of the values of power consumption of the inverter devices 3 included in the group. The average may be a weighted average obtained by weighting values according to the inverter devices 3 included in the group.

The control instructing unit 201 reads apparatus information A1 from the storage unit 22. The apparatus information A1 is information representing a reaction time, a continuation time, and a power consumption volume of the inverter device 3. A reaction time is the shortest time taken from when the inverter control unit 301 receives the first control instruction E1 to when changing power consumption of the power consumption unit 32 is completed. A reaction time is, for example, 10 seconds, 5 minutes, 15 minutes, or the like. A continuation time is a time in which the inverter control unit 301 can continuously change power consumption of the power consumption unit 32. A continuation time is, for example, 5 minutes, 30 minutes, or the like. A power consumption volume indicates power that can be actually consumed by the power consumption unit 32 with respect to instructed power consumption.

In the present embodiment, the apparatus information A1 is information representing a reaction time, a continuation time, and a power consumption volume of the inverter devices 3 for each group according to transmission of a control instruction to each group of inverter devices 3 by the control instructing unit 201. The control instructing unit 201 acquires the reaction time, the continuation time, and the power consumption volume of the inverter devices 3 of each group from the read apparatus information A1.

The control instructing unit 201 generates the first control instruction E1 according to the external control instruction B1 based on the value of the current power consumption, the reaction time, the continuation time, and the power consumption volume of the inverter devices 3 of each group. The first control instruction E1 indicates that power consumption is to be changed by a certain percentage within a certain period of time according to the external control instruction B1.

Here, a percentage by which the power consumption indicated by the first control instruction E1 is changed will be described. Such a percentage is one based on the external control instruction B1 which is an instruction from the aggregator and is smaller than a predetermined percentage. The predetermined percentage is, for example, a percentage that is higher than zero percent and lower than or equal to 10 percent. That is, the first control instruction E1 indicates that the power consumption of the power consumption unit 32 is to be changed while the power consumption unit 32 is operating by a percentage that is lower than the predetermined percentage.

Alternatively, the predetermined percentage may be a percentage that is higher than zero percent and lower than 100 percent. In addition, the first control instruction E1 may indicate to set the power consumption of the power consumption unit 32 to zero percent (to turn off the power consumption unit 32). In addition, the first control instruction E1 may indicate the power consumption of the power consumption unit 32 to be set to 100 percent.

In addition, the first control instruction E1 indicates the inverter control unit 301 to be caused to continuously change power consumption of the power consumption unit 32 for a predetermined period of time or longer. In the present embodiment, the first control instruction E1 indicates each group of the inverter devices 3 to be caused to continuously change the power consumption for the predetermined period of time or longer.

Here, the reaction time, the continuation time, and the power consumption volume may vary depending on the type and the individual of each inverter device 3. For example, there may be an inverter device having a short reaction time and a small power consumption volume, an inverter device having a long reaction time and a large power consumption volume, and the like. In the present embodiment, the reaction time, the continuation time, and the power consumption volume may vary depending on each group of the inverter devices 3. For example, there may be a group having a short reaction time and a small power consumption volume, a group having a long reaction time and a large power consumption volume, or the like.

The control instructing unit 201 may adjust preferentially the power consumption of the group having a shorter reaction time and a smaller power consumption volume, and then may adjust the power consumption of the group having a longer reaction time and a larger power consumption volume.

Step S30: The control instructing unit 201 transmits the generated first control instruction E1 to the inverter device 3. The control instructing unit 201 causes the communication unit 21 to transmit the control instruction D1 to the inverter device 3. In the present embodiment, the control instructing unit 201 transmits the common first control instruction E1 to the inverter devices 3 included in each group of inverter devices 3.

As described above, the control unit 20 transmits the first control instruction E1 to the inverter control unit 301 based on the received external control instruction B1.

The processing of the control instructing unit 201 to transmit the first control instruction E1 to the inverter device 3 in step S30 is performed when the control instructing unit 201 receives the external control instruction B1 from the aggregator in step S10. The aggregator transmits the external control instruction B1 to the power control apparatus 2 when there is an excess or deficiency in the power supply state as described above. As a result, the control unit 20 transmits the first control instruction E1 that is a control instruction indicating that the power consumption of the power consumption unit 32 is to be changed to the inverter control board 30 when there is an excess or deficiency in the power supply state.

Step S40: The inverter control unit 301 changes the power consumption of the power consumption unit 32 based on the first control instruction E1. The inverter control unit 301 acquires the first control instruction E1 received from the power control system 1 by the communication unit 302. The inverter control unit 301 controls an output frequency of the inverter 31 based on the acquired first control instruction E1. The inverter control unit 301 controls the output frequency by the percentage indicated by the first control instruction E1 within the period of time indicated by the first control instruction E1. The time required to change the power consumption of the power consumption unit 32 by the inverter control unit 301 controlling the output frequency of the inverter 31 is shorter than or equal to the reaction time unique to type or each individual inverter device 3.

The inverter control unit 301 transmits the inverter response signal F1 to the power control apparatus 2 when the processing of changing the power consumption of the power consumption unit 32 is completed. The inverter response signal F1 is a signal indicating that the power consumption of the power consumption unit 32 has been changed. The inverter control unit 301 causes the communication unit 302 to transmit the inverter response signal F1.

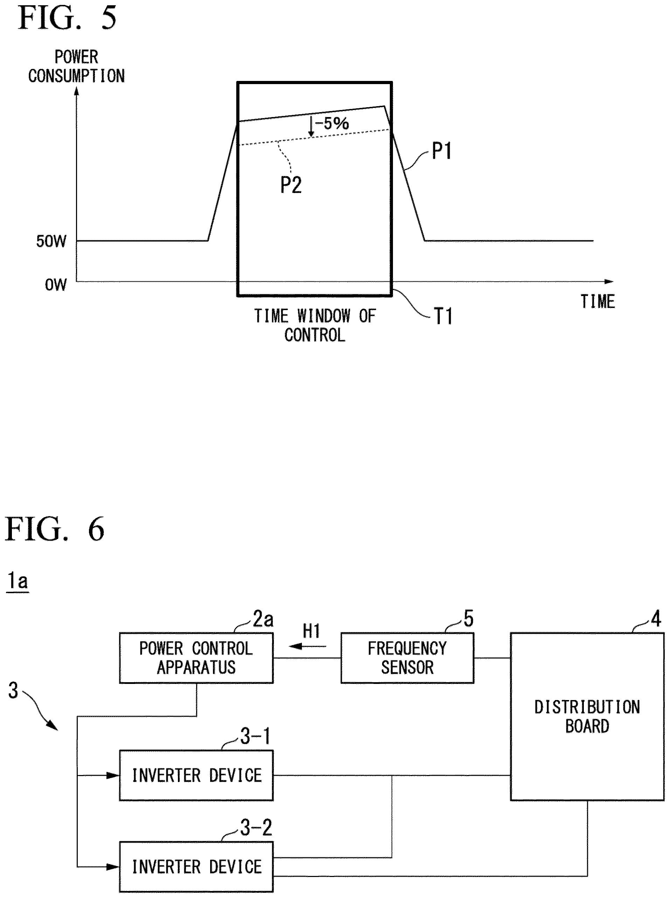

Here, the control by the inverter control unit 301 to change the power consumption of the power consumption unit 32 based on the first control instruction E1 will be described in detail with reference to FIG. 5. FIG. 5 is a graph showing an example of the control of changing power consumption according to the present embodiment. The plot P1 represents the temporal change of the power consumption of the power consumption unit 32 when there is no control based on the first control instruction E1.

As an example, the power consumption unit 32 is controlled such that the power consumption of the power consumption unit 32 repeatedly increases and decreases in the range of low power consumption and high power consumption. A partial period of the control of the repetition is indicated in the plot P1 shown in FIG. 5. In the control, the inverter device 3 consumes 50 W in the period of low power consumption. When the period of high power consumption comes, the power consumption increases up to a predetermined value due to the control of the inverter control unit 301. In the example indicated by the plot P1, the power consumption increases at a predetermined rate due to the control of the inverter control unit 301 in the high power consumption period of the inverter device 3. When a period of low power consumption comes, the power consumption decreases to 50 W again due to the control of the inverter control unit 301.

Meanwhile, the plot P2 represents the temporal change of the power consumption of the power consumption unit 32 when there is control performed based on the first control instruction E1. In the example shown in FIG. 5, the control based on the first control instruction E1 is performed in the period indicated by a time window T1. That is, the control based on the first control instruction E1 is control performed based on the first control instruction E1 in the period of high power consumption after the power consumption of the power consumption unit 32 increases to the predetermined value.

The period in which the control based on the first control instruction E1 is performed is not limited to the period of high power consumption. The period in which the control based on the first control instruction E1 is performed (the period indicated by the time window T1) may be a period in which the power consumption reaches the maximum value (peak) in the period of high power consumption and then decreases to 50 W that is the power consumed in the period of low power consumption. In addition, the period in which the control based on the first control instruction E1 is performed (the period indicated by the time window T1) may be a period in which the power consumption increases to a predetermined value when the period of high power consumption comes after the period of low power consumption. In addition, the period in which the control based on the first control instruction E1 is performed may be a period including the period of low power consumption and the period of high power consumption.

Note that, although actual power consumption can be changed for a short period of time, temporal change of power consumption is represented by straight lines of the plot P1 and the plot P2 for simplicity.

The inverter control unit 301 continuously changes the power consumption, in the period in which the control based on the first control instruction E1 is performed, for a predetermined period of time or longer when the control based on the first control instruction E1 is performed, compared with when the control based on the first control instruction E1 is not performed. In the example indicated by the plot P2, the power consumption decreased by 5 percent in the period indicated by the time window T1 when the control based on the first control instruction E1 is performed, compared with when the control based on the first control instruction E1 is not performed.

When the plot P1 and the plot P2 are compared, at each time included in the period indicated by the time window T1, the power consumption when the control based on the first control instruction E1 is performed changes by a predetermined percentage, compared with that when the control based on the first control instruction E1 is not performed. Note that the inverter control unit 301 may change the power consumption when the control based on the first control instruction E1 is performed by a different percentage at each time, compared with when the control based on the first control instruction E1 is not performed. For example, the inverter control unit 301 may change the power consumption when the control based on the first control instruction E1 is performed by a different predetermined percentage in each period obtained by dividing the period indicated by the time window T1 into multiple periods, compared with when the control based on the first control instruction E1 is not performed. For example, the inverter control unit 301 may divide the period indicated by the time window T1 into two periods including a first half and a second half and reduce the power consumption in the first half period by 4 percent and reduce the power consumption in the second half period by 6 percent. The percentage at which the power consumption of each period is changed is indicated by the first control instruction E1.

Returning to FIG. 4, description of the power control process will be continued.

Step S50: The control instructing unit 201 receives the inverter response signal F1 from the inverter device 3. The control instructing unit 201 causes the communication unit 21 to receive the inverter response signal F1. The control instructing unit 201 receives the inverter response signal F1 for each inverter device 3 to be controlled. In the present embodiment, each of inverter response signals F1 is received from all inverter devices 3 included in the group to be controlled.

Step S60: The control instructing unit 201 transmits a control apparatus response signal G1 to the aggregator. Upon receiving the inverter response signals F1 from all of the inverter devices 3 included in the group to be controlled, the control instructing unit 201 generates the control apparatus response signal G1. The control apparatus response signal G1 indicates that the processing of changing the power consumption of the inverter device 3 has been completed according to the external control instruction B1 from the aggregator. The control instructing unit 201 causes the communication unit 21 to transmit the generated control apparatus response signal G1 to the aggregator. As a result, the control unit 20 transmits the control apparatus response signal G1 according to the inverter response signal F1 received from the inverter control unit 301 to the outside (aggregator).

With this operation, the power control system 1 ends the power control process.

Here, in the power control process described above, the time from when the control unit 20 receives the external control instruction B1 from the aggregator to when the control unit transmits the control apparatus response signal G1 to the outside (aggregator) is within 15 minutes. The time may be 5 minutes or within 10 seconds. The target whose power consumption is controlled by the power control apparatus 2 is the inverter devices 3 as described above. Since power consumption of the power consumption unit 32 is adjusted according to an output frequency of the inverter 31 in the inverter devices 3, a time required for reaction is, for example, 10 seconds, 5 minutes, or the like, which is shorter than that of a device with no inverter.

In addition, the power control apparatus 2 changes the power consumption of the power consumption unit 32 while the power consumption unit 32 is operating by a percentage that is lower than the predetermined percentage as described above. For this reason, the power control apparatus 2 can shorten the time required for the inverter device 3 to change the power consumption (that is, the time required for reaction), compared with a case in which the power consumption is changed by a higher percentage than the predetermined percentage.

The power control system 1 enables a short reaction time less than 15 minutes because the control target whose power consumption is changed by the power control apparatus 2 is a device with an inverter and a percentage by which the power consumption is changed is lower than the predetermined percentage.

Note that the operation of the control unit 20 from the reception of the external control instruction B1 from the aggregator to the transmission of the control apparatus response signal G1 to the aggregator includes the processing of the control unit 20 transmitting the first control instruction E1 to the inverter control unit 301 and the processing of the control unit 20 receiving the inverter response signal F1 from the inverter control unit 301. Here, the inverter response signal F1 is an example of a first response. The control apparatus response signal G1 is an example of a second response.

The time from when the control unit 20 receives the external control instruction B1 from the aggregator to when it transmits the control apparatus response signal G1 to the aggregator may be within 15 minutes, and the time from when the control unit 20 transmits the first control instruction E1 to the inverter control unit 301 to when the control unit 20 receives the inverter response signal F1, which is a response indicating that the power consumption of the power consumption unit 32 has been changed, from the inverter control unit 301, may be within 15 minutes. In this case, the control unit 20 receives the inverter response signal F1 from the inverter control unit 301 within 15 minutes after transmitting the first control instruction E1 to the inverter control unit 301.

Note that the case in which the control instructing unit 201 groups multiple inverter devices 3 to monitor the operation state of each group and transmits a common first control instruction E1 to one or more inverter devices 3 included in the group for each group has been described in the present embodiment as an example. That is, in the present embodiment, the control unit 20 monitors power consumption in units of multiple power consumption units 32 and transmits the first control instruction E1 that is common to each of the multiple power consumption units 32 when there is an excess or deficiency in the power supply state. With this configuration, control can be performed more simply and the reaction time becomes shorter in the power control apparatus 2, compared with a case in which multiple power consumption units 32 are controlled individually.

Note that the control instructing unit 201 may monitor operation states of multiple inverter devices 3 individually, and transmit the first control instruction E1, which has been generated for each of the inverter devices 3, to the inverter devices 3 individually. That is, the control instructing unit 201 may monitor power consumption of the multiple power consumption units 32 in units of the individual power consumption units 32 and transmit the first control instructions E1 individually to each of the multiple power consumption units 32 when there is an excess or deficiency in the power supply state. Because the power consumption of each of the multiple power consumption units 32 can be controlled more accurately in this case, compared with a case in which multiple power consumption units 32 are controlled in units of groups, a precise adjustment capability can be provided.

### (Second Embodiment)

A second embodiment of the present invention will be described below in detail with reference to the drawings.

In the above-described first embodiment, the case in which the power control apparatus 2 communicates with the aggregator and transmits a control instruction (the first control instruction E1) to the inverter device 3 based on a control instruction (the external control instruction B1) from the aggregator has been described. In the present embodiment, when the power control apparatus detects an excess or deficiency in its own power supply state and transmits a control instruction to the inverter device 3 without receiving a control instruction from outside will be described. In other words, a case in which the power control apparatus performs self-end control in an off-line state will be described.

The power control system according to the present embodiment is referred to as a power control system 1a.

Note that the same reference signs are given to the same configurations as those of the above-described first embodiments, and descriptions of the same configurations and operations may be omitted.

### [Configuration of Power Control System 1a]

FIG. 6 is a diagram illustrating an example of a configuration of the power control system 1a according to the present embodiment. The power control system 1a includes a power control apparatus 2a, inverter devices 3, a distribution board 4, and a frequency sensor 5. Comparing the power control system 1a according to the present embodiment (FIG. 6) to the power control system 1 according to the first embodiment (FIG. 1), the differences are the power control apparatus 2a and the frequency sensor 5. Here, functions of the other constituent elements (the inverter devices 3 and the distribution board 4) are the same as those in the first embodiment. Descriptions of the same functions as those in the first embodiment are omitted, and differences of the second embodiment from the first embodiment will be mainly described.

The frequency sensor 5 detects the frequency of power supplied from the power grid network to the inverter devices 3. The frequency sensor 5 is an example of a frequency detector. The frequency sensor 5 is installed at a terminal of the distribution board 4 to supply power to the inverter devices 3. The frequency sensor 5 outputs frequency information H1 indicating the detected frequency to the power control apparatus 2a.

Note that the frequency sensor 5 may be provided separately from the power control apparatus 2a or provided integrally with the power control apparatus 2a. In a case in which the frequency sensor 5 is provided integrally with the power control apparatus 2a, the frequency sensor is installed inside the power control apparatus 2a. Providing the frequency sensor 5 integrally with the power control apparatus 2a means, in other words, that, among a control target (a device including an inverter) for which control for stabilizing the power supply state of the power grid network is performed and the power control apparatus (the power control apparatus 2a) that performs the control, the frequency detector (the frequency sensor 5) is provided in the power control apparatus.

### [Functional Configuration of Power Control Apparatus 2a]

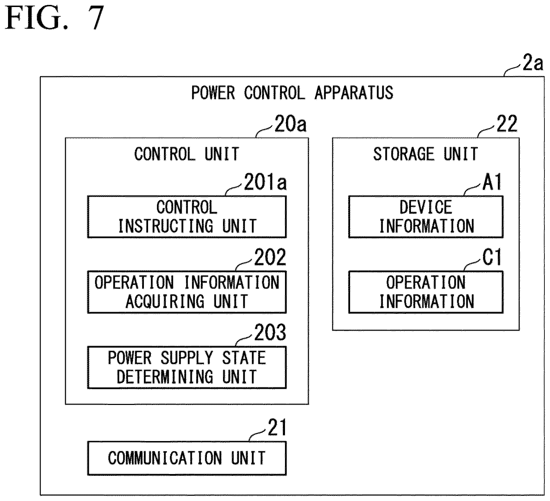

FIG. 7 is a diagram illustrating an example of a functional configuration of the power control apparatus 2a according to the present embodiment. The power control apparatus 2a includes a control unit 20a, a communication unit 21, and a storage unit 22. Comparing the power control apparatus 2a according to the present embodiment (FIG. 7) to the power control apparatus 2 according to the first embodiment (FIG. 2), the difference is the control unit 20a. Here, functions of the other constituent elements (the communication unit 21 and the storage unit 22) are the same as those in the first embodiment.

The control unit 20a includes a control instructing unit 201a, an operation information acquiring unit 202, and a power supply state determining unit 203.

The power supply state determining unit 203 determines whether there is an excess or deficiency in the power supply state based on the frequency information H1 output from the frequency sensor 5.

If the power supply state determining unit 203 determines that there is an excess of deficiency in the power supply state, the control instructing unit 201a transmits a first control instruction E1 to the inverter control unit 301.

### [Power Control Process]

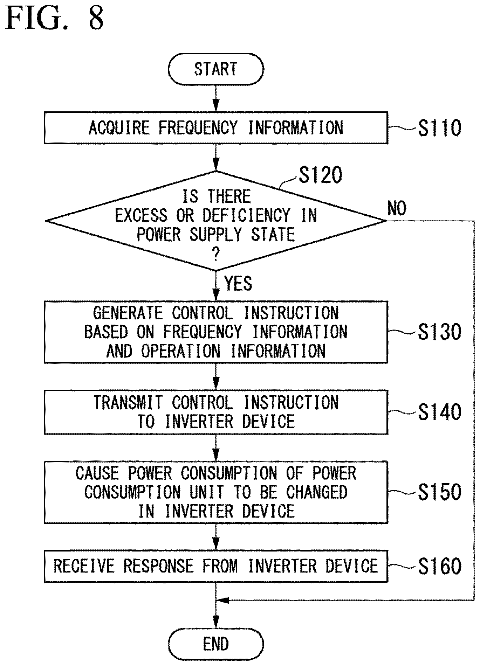

FIG. 8 is a flowchart showing an example of the power control process according to the present embodiment. In the power control system 1a, the power control process is repeatedly performed while the power grid network supplies power to the inverter devices 3.

Note that, since each processing of step S140, step S150, and step S160 is the same as each processing of step S30, step S40, and step S50 in FIG. 4, description thereof is omitted.

Step S110: The power supply state determining unit 203 acquires the frequency information H1 output from the frequency sensor 5.

Step S120: The power supply state determining unit 203 determines whether there is an excess or deficiency in the power supply state based on the frequency information H1 output from the frequency sensor 5. The power supply state determining unit 203 calculates the deviation of the frequency of the power supplied from the power grid network to the inverter devices 3 based on, for example, the frequency information H1. The power supply state determining unit 203 calculates the difference between the moving average of the frequency from a first time to the present and the moving average of the frequency from a second time that is later than the first time to the present as a frequency deviation based on the frequency information H1. The first time is, for example, the time 3 minutes before the present. The second time is, for example, the time 0.2 seconds before the present.

The power supply state determining unit 203 determines that there is an excess or deficiency in the power supply state if the calculated frequency deviation is equal to or greater than a predetermined value.

If the power supply state determining unit 203 determines that there is an excess or deficiency in the power supply state (step S120; YES), the control unit 20a performs the processing of step S130. On the other hand, if the power supply state determining unit 203 determines that there is no excess or deficiency in the power supply state (step S120; NO), the control unit 20a ends the power control process.

Step S130: The control instructing unit 201a generates the first control instruction E1 based on the frequency information H1 and the operation information C1. The control instructing unit 201a calculates the difference between the power supplied to all of the inverter devices 3 from the power grid network and the power consumption of all of the inverter devices 3 based on the frequency information H1 and the operation information C1. The control instructing unit 201a calculates the amount of the power consumption to be changed with respect to the power consumption of all the inverter devices 3 based on the calculated difference. Note that the amount of the power consumption to be changed may be calculated by the power supply state determining unit 203.

The amount of the power consumption to be changed with respect to the power consumption of the all the inverter devices 3 is an amount instructed by the aggregator through the external control instruction B1 in the above-described first embodiment. The processing of step S130 is similar to the processing of step S20 of FIG. 4 except that the amount is calculated by the control instructing unit 201a.

In step S140, the control instructing unit 201 transmits the generated first control instruction E1 to the inverter devices 3 as in step S30. Step S140 is performed if it is determined that there is an excess of deficiency in the power supply state in step S120. Thus, the control unit 20a transmits the first control instruction E1 to the inverter control board 30 if it is determined that there is an excess or deficiency in the power supply state based on the frequency detection result supplied by the frequency sensor 5 to the inverter devices 3.

Note that, in the power control processing steps according to the present embodiment, when the control instructing unit 201a receives the inverter response signal F1 from the inverter devices 3 in step S160, the control unit 20a ends the power control process.

Here, in the power control process according to the present embodiment, the time from when the control unit 20a receives the inverter response signal F1 from the inverter control board 30 after transmitting the first control instruction E1 to the inverter control board 30 is within 15 minutes.

Note that the inverter devices 3 may be air conditioning equipment or refrigeration devices installed in office buildings or the like. Such air conditioning equipment or refrigeration devices installed in office buildings or the like may receive supply of power from a system different from that of other inverter devices. For example, although the inverter devices 3 described in each embodiment receives supply of power from the power grid network via the distribution board 4, such air conditioning equipment or refrigeration devices installed in office buildings or the like may receive supply of power from a power grid network via a system other than the distribution board 4. In this case, the power control apparatus 2 or 2a may acquire accumulation information from the system that supplies power to the air conditioning equipment or the refrigeration devices and determine the operation state of the air conditioning equipment or the refrigeration devices, instead of using the operation information C1.

Note that, when air conditioning is performed by a refrigeration device (cooler) included in an inverter, as in a large-scale data center or the like, the refrigeration device may be called an air conditioning device.

### (Summary of Each Embodiment)

The power control apparatuses 2 and 2a according to the embodiments are power control apparatuses for stabilizing power supply states of the power grid network and include the control units 20 and 20a as described above. The control units 20 and 20a transmit the control instruction D1 for instructing power consumption of the power consumption unit 32 provided on the downstream side of the inverter 31 to the inverter control unit 301 that controls the inverter 31 receiving supply of power from the power grid network.

The control units 20 and 20a transmit the first control instruction E1 that is the control instruction D1 indicating that the power consumption of the power consumption unit 32 is to be changed to the inverter control unit 301 when there is an excess or deficiency in the power supply state.

The time from when the control units 20 and 20a transmit the first control instruction E1 to the inverter control unit 301 to when the control unit 20 and 20a receives a response (the inverter response signal F1 in the present embodiment) indicating that the power consumption of the power consumption unit 32 from the inverter control unit 301 is within 15 minutes.

The first control instruction E1 indicates causing the inverter control unit 301 to continuously change the power consumption of the power consumption unit 32 for a predetermined period of time or longer.

Since the power control apparatuses 2 and 2a according to the present embodiments can make reactions within 15 minutes and continuously (constantly) change the power consumption for the predetermined period of time or longer with this configuration, the adjustment capability of matching the amount of power supply with the amount of power consumption for a short period of time can be provided to the power grid network. The short period of time refers to, for example, a time shorter than or equal to 15 minutes. The short period of time is preferably a period of time about 5 minutes required for the adjustment capability in the realm of governor-free control and LFC.

The power control apparatuses 2 and 2a according to the present embodiments control the power consumption of multiple operating inverter devices 3 such that the result obtained by measuring frequency fluctuation of the power grid network falls within specified frequency fluctuation for a certain period of time. As described above, the power control apparatuses 2 and 2a may control multiple inverter devices 3 in units of groups. In a case in which multiple inverter devices 3 are controlled in units of groups, control is simpler and thus the reaction time becomes shorter than in a case in which multiple inverter devices are controlled individually.

By adding the above-described inverter control unit 301 as software to a microcomputer provided in an inverter control board provided in an inverter device of the related art (add-on), the power control apparatuses 2 and 2a can control the inverter device of the related art through the power control process. The software corresponding to the inverter control unit 301 controls power consumption based on measurement results of frequency fluctuation of the power grid network obtained from outside. In the inverter device having the software as an add-on, the power consumption of the power consumption unit provided on the downstream side of the inverter can be controlled by plus/minus a few percent based on the measurement results of frequency fluctuation of the power grid network obtained from outside. Therefore, groups of operating inverter devices can be utilized in the power grid network with adjustment capabilities in the realm of governor-free control and LFC, and thus the ratio of renewable energy as power source can be increased.

Note that a part of the power control apparatuses 2 and 2a of the above-described embodiments, for example, the control units 20 and 20a (the control instructing units 201 and 201a, the operation information acquiring unit 202, and the power supply state determining unit 203) may be realized by a computer. In this case, a program for realizing the control functions may be recorded in a computer-readable recording medium, and the program recorded in the recording medium may be read by a computer system to be executed. Note that it is assumed that the "computer system" mentioned here refers to a computer system built into the power control apparatuses 2 and 2a and includes an OS and hardware components such as a peripheral device. Furthermore, the "computer-readable recording medium" refers to a portable medium such as a flexible disk, a magneto-optical disk, a ROM, a CD-ROM, and the like, and a storage apparatus such as a hard disk built into the computer system. Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system functioning as a server or a client in such a case. Furthermore, the above-described program may be a program for realizing some of the above-described functions and further a program that can realize the above-described functions in combination of a program already recorded in the computer system.

In addition, a part or all of the power control apparatuses 2 and 2a according to the above-described embodiments may be realized by an integrated circuit such as a large-scale integration (LSI). The functional blocks of each of the power control apparatuses 2 and 2a may be individually made into a processor, or a part or all of the functional blocks may be integrated into a processor. In addition, a technique of making the functions into an integrated circuit is not limited to LSI, and the functions may be realized by a dedicated circuit or a general-purpose processor. Furthermore, in a case in which a circuit integration technology that replaces LSI appears as the semiconductor technologies advance, an integrated circuit based on the technology may be used.

Although the embodiments of the present invention have been described in detail above referring to the drawings, a specific configuration is not limited to those of the embodiments, and various design changes can be made within the scope not departing from the gist of the present invention.

### [Industrial Applicability]

As described above, the power control apparatus, the power control system, and the program according to the present invention impart the adjustment capability of the aggregator to adjust demand and supply of power in a virtual power plant to inverter devices of air conditioning equipment, refrigeration devices, or the like, and provide such adjustment capability to the supply/demand adjustment market for the realm of load frequency control (LFC) and governor-free control. Note that the supply/demand adjustment market is scheduled to be launched in 2024 in Japan.

### [Reference Signs List]

2, 2a Power control apparatus
20, 20a Control unit
31 Inverter
301 Inverter control unit
32 Power consumption unit
D1 Control instruction
E1 First control instruction
F1 Inverter response signal

## Claims

1. A power control apparatus for stabilizing a power supply state of a power grid network, comprising:
a control unit configured to transmit a control instruction indicating power consumption of a power consumption unit provided on a downstream side of an inverter, which receives supply of power from the power grid network, to an inverter control unit that controls the inverter,
wherein the control unit transmits a first control instruction, which is the control instruction, to the inverter control unit, the first control instruction indicating that the power consumption of the power consumption unit is to be increased when there is an excess in the power supply state and indicating that the power consumption of the power consumption unit is to be decreased when there is a deficiency in the power supply state,
the control unit receives a first response indicating that the power consumption of the power consumption unit has been changed from the inverter control unit after the first control instruction is transmitted to the inverter control unit, and
the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

2. The power control apparatus according to claim 1, wherein the first control instruction indicates that the power consumption of the power consumption unit is to be changed while the power consumption unit is operating by a percentage that is lower than a predetermined percentage that is a percentage higher than 0 percent and lower than or equal to 100 percent from the power consumption of the power consumption unit.

3. The power control apparatus according to claim 1 or 2,
wherein the control unit receives an external control instruction that is a control instruction transmitted from outside when there is an excess or deficiency in the power supply state and indicating that the power consumption of the power consumption unit is to be changed,
the control unit transmits the first control instruction to the inverter control unit based on the received external control instruction, and
the control unit transmits a second response according to the first response received from the inverter control unit to the outside.

4. The power control apparatus according to claim 1 or 2, further comprising:
a frequency detection unit configured to detect a frequency of power supplied from the power grid network to the inverter,
wherein, if it is determined that there is an excess or deficiency in the power supply state based on a detection result of the frequency of the frequency detection unit, the control unit transmits the first control instruction to two or more inverter control units, and
the control unit receives the first response from the two or more inverter control units.

5. The power control apparatus according to any one of claims 1 to 4, wherein the control unit monitors power consumption in units of multiple power consumption units and transmits the first control instruction that is common to each of the multiple power consumption units when there is an excess or deficiency in the power supply state.

6. The power control apparatus according to any one of claims 1 to 4, wherein the control unit monitors power consumption in units of individual power consumption units with respect to multiple power consumption units and transmits the first control instruction to each of the multiple power consumption units individually when there is an excess or deficiency in the power supply state.

7. The power control apparatus according to any one of claims 1 to 6, wherein the inverter is provided in an air conditioning device or a refrigeration device.

8. A power control system comprising:
a power control apparatus for stabilizing a power supply state of a power grid network; and
one or more inverter devices,
wherein each of the inverter devices includes
an inverter configured to receive supply of power from the power grid network,
an inverter control unit configured to control the inverter, and
a power consumption unit provided on a downstream side of the inverter,
the power control apparatus includes a control unit configured to transmit a control instruction indicating power consumption of the power consumption unit to the inverter control unit,
the control unit transmits a first control instruction, which is the control instruction, to the inverter control unit, the first control instruction indicating that the power consumption of the power consumption unit is to be increased when there is an excess in the power supply state and indicating that the power consumption of the power consumption unit is to be decreased when there is a deficiency in the power supply state,
the control unit receives a first response indicating that the power consumption of the power consumption unit has been changed from the inverter control unit after the first control instruction is transmitted to the inverter control unit, and
the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.

9. A program causing a computer of a power control apparatus for stabilizing a power supply state of a power grid network to perform:
a step of transmitting a control instruction indicating power consumption of a power consumption unit provided on a downstream side of an inverter, which receives supply of power from the power grid network, to an inverter control unit that controls the inverter;
a step of transmitting, to the inverter control unit, a first control instruction that is the control instruction indicating that the power consumption of the power consumption unit is to be increased when there is an excess in the power supply state and indicating that the power consumption of the power consumption unit is to be decreased when there is a deficiency in the power supply state; and
a step of receiving a first response indicating that the power consumption of the power consumption unit has been changed from the inverter control unit after the first control instruction is transmitted to the inverter control unit,
wherein the first control instruction indicates to the inverter control unit that the power consumption of the power consumption unit is to be continuously changed, in a period in which control based on the first control instruction is performed, for a predetermined period of time or longer compared with a case in which control based on the first control instruction is not performed.
